# EUROPEAN PATENT SPECIFICATION

(11) **EP 3 447 631 B1**
(45) Date of publication and mention of the grant of the patent: **05.07.2023**
(21) Application number: 16899304.6
(22) Date of filing: 29.12.2016
(51) Int. Cl.: G06F 3/14, G06F 3/0488, G09B 5/10, G06F 3/04883, G06V 10/94, G06V 30/32

(54) **WRITING TRAJECTORY SYNCHRONIZATION METHOD AND SYSTEM FOR MULTIPLE CLIENTS**
VERFAHREN UND SYSTEM ZUR SYNCHRONISATION VON SCHREIBTRAJEKTORIEN FÜR MEHRERE KUNDEN
PROCÉDÉ ET SYSTÈME DE SYNCHRONISATION DE TRAJECTOIRES D'ÉCRITURE POUR PLUSIEURS CLIENTS

(30) Priority: 19.04.2016 CN 201610246833
(43) Date of publication of application: 27.02.2019
(73) Proprietor: Guangzhou Shirui Electronics Co., Ltd., Guangzhou, Guangdong 510663 (CN)
(72) Inventor: HUANG, Baohua, Guangzhou Guangdong 510663 (CN)
(74) Representative: dompatent von Kreisler Selting Werner - Partnerschaft von Patent- und Rechtsanwälten mbB
(86) International application number: PCT/CN2016/113210
(87) International publication number: WO 2017/181725

(56) References cited:
- CN-A- 103 744 555
- CN-A- 104 133 630
- CN-A- 104 915 100
- CN-A- 105 930 121
- JP-A- 2002 077 858
- US-A- 5 940 082
- US-A1- 2015 002 435

## Description

### TECHNICAL FIELD

The present invention relates to the technical field of computer application software technology and, in particular, to a method and a system for synchronizing handwriting of multiple clients.

### BACKGROUND

With popularity of intelligent electronic devices in daily lives, intelligent tablet plays a significant role in various fields, for example, in the field of distance education, multiple intelligent tablets are interconnected over a network to obtain a face-to-face effect. Through a client of an intelligent tablet, a user may communicate handwriting with other clients through a server, thereby achieving a real-time synchronization of handwriting and a presentation of writing contents.

Currently, there are two ways generally used in the conventional multi-client synchronization of handwriting. One way is to transmit a handwriting to a server by a client of a transmitting side, after each client finishes its handwriting, the server performs synchronization and then forwards the handwriting to an interface of a client of a receiving side for restoration. This approach requires handwriting of each client to be completed before synchronization, resulting in poor real-time performance. The other way is to transmit segmented handwriting for several times to a server by a client during a handwriting is written by each client, where a segmented handwriting is transmitted each time, and the server forwards the segmented handwriting to an interface of a client of a receiving side for restoration after each segmented handwriting has been synchronized by the server. The server achieves synchronization of handwriting in a manner of "recording-synchronizing-recording-synchronizing". In this way, the real-time performance is improved to some extent; however, when there are too many handwritings being written at a same time, this segmented synchronization would affect the efficiency of synchronization, and easily lead to a loss of data, which is hard to be recovered.

In summary, conventional solutions have the defect of low synchronizing efficiency when synchronizing handwriting of multi-clients.

US20150002435 discloses a projector, a figure input/display apparatus, portable
terminal, and a program. Each terminal of all of the attendees has a touch-panel-equipped terminal having a function of dividing any input line drawing on the terminal into line segment data, successively transmitting the line segment data to the controller, and displaying line drawing information transmitted from the contrailer on the display of the touch-panel-equipped terminal. A liquid crystal projector having a controller that can be embedded therein or that is connectable thereto is provided, the controller having a function of sequentially recording line drawing information transmitted from each touch-panel-equipped terminal in a data base, adding the line drawing information to a video image memory of the whiteboard, and projecting the video image memory contents onto a wall surface while transmitting information of the data base to each touch-panel equipped terminal. US5940082A discloses a system and method for managing a real-time distributed collaborative drawing activity. A community of collaborators associated with client computers are connected via a communications link with a server computer. Each collaborator contributes to the real-time design of a shared drawing that is displayed in each collaborator's virtual whiteboard. Contributions to the shared drawing as well as communications between the collaborators are transmitted to the server computer. The server computer broadcasts the communication to each of the collaborators engaged in the design activity. Each user has a set of drawing tools that are used to generate a variety of drawing strokes that edit the shared drawing. A curve generating procedure is used to capture the manner in which the user draws the stroke in order to emulate a selected drawing tool. A compact representation of the user's stroke is generated and transmitted to each collaborator.

### SUMMARY

Accordingly, it is necessary to provide a method and a system for synchronizing handwriting of multiple clients to the problem of low synchronizing efficiency when performing synchronizing handwriting of multi-clients in a conventional way.

A method for synchronizing handwriting of multiple clients, comprising the steps of claim 1.

A system for synchronizing handwriting of multiple clients, comprising the features according to claim 7.

The above method and system for synchronizing handwriting of multi-clients, During a writing process, segmented handwriting data of each sender is forwarded to each receiver in real time respectively, the receiver receives and then restore it into a real-time writing handwriting to improve the synchronizing efficiency of handwriting. After a complete writing, complete handwriting data of each sender is forwarded to each receiver, the receiver receives synchronously and insert into an interface for display, which ensures displaying effect of handwriting. This solution improves efficiency of synchronizing handwriting of multiple clients while ensuring the display of handwriting, thereby enhancing user experience.

### BRIEF DESCRIPTION OF DRAWINGS

FIG. 1 is a schematic network diagram for implementing a method for synchronizing handwriting of multiple clients according to an embodiment;
FIG. 2 is a flowchart of a method for synchronizing handwriting of multiple clients;
FIG. 3 is a flowchart of synchronous interaction of handwriting; and
FIG. 4 is a schematic diagram of a system for synchronizing handwriting of multiple clients.

### DESCRIPTION OF EMBODIMENTS

Detailed description of technical solution of the present invention will be set forth in conjunction with the invention's drawings.

The "sender" and "receiver" in the present invention may be a client running on an intelligent terminal such as an intelligent tablet. A user may log in to a server through a client, interact information with the server via the sender during a handwriting process, and perform information interaction with the server via the receiver when receiving a writing handwriting. For each sender, the receiver refers to any other client except itself.

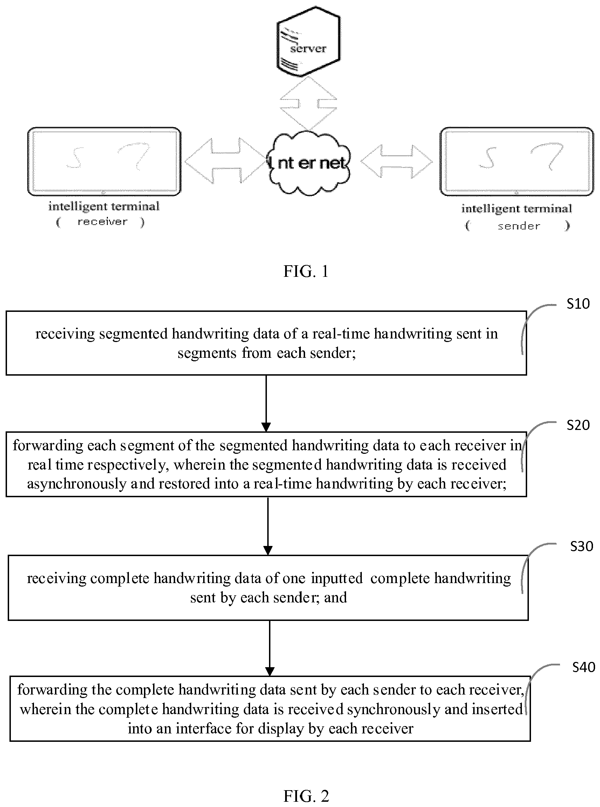

According to FIG. 1, FIG. 1 is a schematic network diagram for implementing a method for synchronizing handwriting of multiple clients according to an embodiment, wherein a plurality of intelligent terminals are interconnected over a network (e.g. the Internet), such that a handwriting written on any intelligent terminal can be synchronized to each intelligent terminal (left of the figure).

According to FIG. 2, FIG. 2 is a flowchart of a method for synchronizing handwriting of multiple clients. The method may be applied on a server, and comprises the steps of:
S10, receiving segmented handwriting data of a real-time handwriting transmitted in segments by each sender.

In this step, a real-time handwriting inputted by a user is transmitted by each sender, wherein a sender transmits in a segment-wise manner, a small segment of writing handwriting is transmitted each time, and these segmented handwriting data are received by a server end in real time, where handwriting data mainly records location information and property information of a handwriting point.

In an embodiment, the sender obtains an inputted handwriting point of the user, and forms a set of input points from a plurality of consecutive input points to obtain segmented handwriting data; wherein an input mode of handwriting may include mouse's input, touching input, motion sensing input, optical input and the like.

In an embodiment according to the present invention, identification information is set for the set of inputted handwriting points of the user, and one or more segments of handwriting data segment are formed based on the identification information; where the identification information includes ID (identification) of a user and ID of a set of points, where the ID of a user is for identifying a user by whom a writing handwriting is written, and the ID of a set of points is for identifying a writing handwriting.

In an embodiment, when a plurality of handwritings are being written on a sender in real-time, the segmented handwriting data of each handwriting transmitted at a preset frequency by a sender is received. For example, the sender may send the handwriting data to the server at a frequency of 20 times per second. Further, transmission performance of the sender may be detected. When the transmission performance is deteriorated, the transmission frequency is reduced, and when the performance gets better, the transmission frequency is restored to the preset frequency.

In the above embodiments, a real-time writing process is being synchronized, while the handwriting data is not inserted into an interface, thus allowing an adjustment of data transmission frequency according to the performance, thereby ensuring the effect of synchronous handwriting.

S20, forwarding each segment of the segmented handwriting data to each receiver in real time respectively, wherein the segmented handwriting data is received asynchronously and restored into a real-time handwriting by each receiver.

In this step, the server forwards the segmented handwriting data to each receiver once receiving it, wherein the segmented handwriting data is received asynchronously and restored into a real-time handwriting by each receiver. Since handwriting process is synchronized in a manner of asynchronous reception, it is unnecessary to wait for a synchronizing process by the server, and the handwriting data is not inserted into an interface, thereby improving the efficiency of synchronization and preventing systematic congestion.

In an embodiment according to the present invention, the receiver restores one or more segments of segmented handwriting data into a real-time handwriting inputted by the user according to the identification information.

In an embodiment, when forwarding each segment of the segmented handwriting data to each receiver in real time, a segment of the segmented handwriting data is discarded if it is failed to be forwarded.

According to the solution of the above embodiment, during the process of forwarding the handwriting data, the handwriting data is discarded when it is failed to be forwarded. Although some data may be lost, efficiency of a real-time writing is ensured.

S30, receiving complete handwriting data of one inputted complete handwriting sent by each sender.

In this step, each sender sends a complete handwriting inputted by the user, and the server synchronizes the complete handwriting sent by each sender, ensuring the security and integrity of time.

S40, forwarding the complete handwriting data sent by each sender to each receiver, wherein the complete handwriting data is received synchronously and inserted into an interface for display by each receiver.

In this step, after synchronizing the complete handwriting data from each sender, the server forwards it to each receiver, which receives the complete handwriting data synchronously, processes it, and inserts it into an interface for display.

Further, when forwarding the complete handwriting data, recording the complete handwriting data at each time of an inputted complete handwriting of each sender, and the complete handwriting data is sent to a newly added receiver to insert the complete handwriting data into an interface for display.

According to the solution of the above embodiment, the effect of a final handwriting can be ensured, and for the newly added receiver, the effect of writing handwriting of the entire writing process may be obtained.

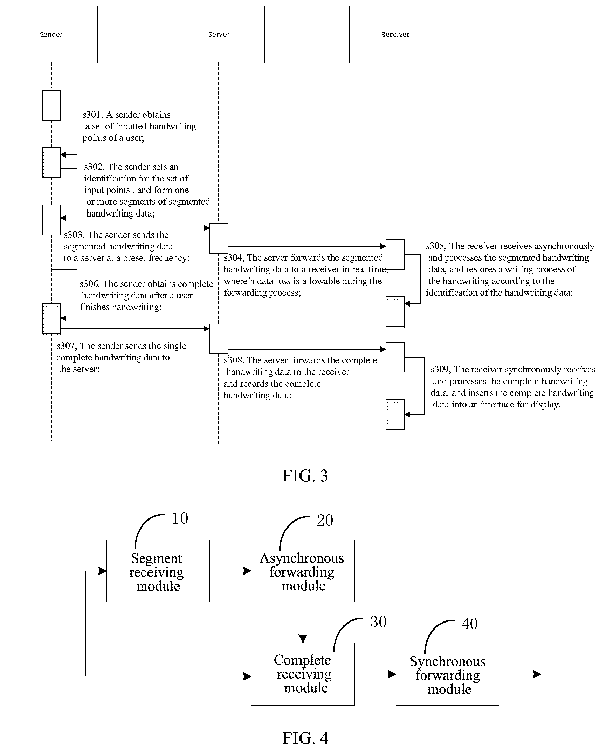

For a thorough understanding of a method for synchronizing handwriting of multiple clients according to the present invention, descriptions are set forth in conjunction with an application example. According to FIG. 3, which is a flowchart of synchronous interaction of handwriting, wherein a sender and a receiver interact with a server end via a network, specifically the flow comprises the steps of:
s301, A sender obtains a set of inputted handwriting points of a user;
s302, The sender sets an identification for the set of input points, and form one or more segments of segmented handwriting data;
s303, The sender sends the segmented handwriting data to a server at a preset frequency;
s304, The server forwards the segmented handwriting data to a receiver in real time, wherein data loss is allowable during the forwarding process;
s305, The receiver receives asynchronously and processes the segmented handwriting data, and restores a writing process of the handwriting according to the identification of the handwriting data;
s306, The sender obtains complete handwriting data after a user finishes handwriting;
s307, The sender sends the single complete handwriting data to the server;
s308, The server forwards the complete handwriting data to the receiver and records the complete handwriting data;
s309, The receiver synchronously receives and processes the complete handwriting data, and inserts the complete handwriting data into an interface for display.

According to the above technical solution, a plurality of users may log in to a server, and the plurality of users perform writing on intelligent terminals, a sender sends a handwriting in real time, a receiver connected to the server synchronizes a handwriting process in real time, and receives and displays a complete writing handwriting after each writing is finished.

According to FIG. 4, FIG. 4 is a schematic diagram of a system for synchronizing handwriting of multiple clients. The system may be implemented on a server, comprising:
a segmented receiving module 10, is configured to receive segmented handwriting data of a real-time handwriting sent in segments by each sender;
an asynchronous forwarding module 20, is configured to forward each segment of the segmented handwriting data to each receiver in real time respectively, where the segmented handwriting data is received and restored into a real-time writing handwriting asynchronously by each receiver;
a complete receiving module 30, is configured to receive complete handwriting data of one inputted complete handwriting sent by each sender; and
a synchronous forwarding module 40, is configured to forward the complete handwriting data transmitted by each sender to each receiver, where the complete handwriting data is received synchronously and inserted into an interface for display by each receiver.

In an embodiment according to the present invention, the sender obtains an input point of a handwriting of a user, and forms a set of input points from a plurality of consecutive input points to obtain segmented handwriting data; wherein an input mode of the handwriting may comprise mouse's input, touching input, motion sensing input, optical input and the like.

In an embodiment according to the present invention, identification information is set for a set of input points of a handwriting of a user by the sender, and one or more segments of handwriting data segment are formed based on the identification information; wherein the identification information comprises ID (identification) of a user and ID of a set of points.

In an embodiment, when a plurality of handwritings are being written on a sender in real time, segmented handwriting data of each handwriting sent at a preset frequency by a sender is received. For example, the sender may send the handwriting data to the server at a frequency of 20 times per second. Further, sending performance of a sender may be detected. When the sending performance is deteriorated, the sending frequency is reduced; when the performance gets better, the sending frequency is restored to the preset frequency.

In the above embodiments, a real-time writing process is being synchronized, while a handwriting data is not inserted into an interface, thus allowing an adjustment of data transmission frequency according to the performance, thereby ensuring the effect of synchronous writing.

In an embodiment according to the present invention, the receiver restores one or more segments of segmented handwriting data into a real-time handwriting inputted by the user according to the identification information.

In an embodiment, when the asynchronous forwarding module 20 forwards each segment of the segmented handwriting data to each receiver in real time, a segment of the segmented handwriting data is discarded when it is failed to be forwarded.

According to the solution of the above embodiment, during the process of forwarding the handwriting data, the handwriting data is discarded when it is failed to be forwarded. Although some data may be lost, efficiency of a real-time writing is ensured.

In an embodiment, when forwarding the complete handwriting data, the complete receiving module 30 further records the complete handwriting data each time of a complete writing input of each sender, and the complete handwriting data is transmitted to a newly added receiver to insert the complete handwriting data into an interface for display.

According to the solution of the above embodiments, the effect of a final handwriting can be ensured, and for the newly added receiver, the effect of handwriting of the entire writing process may be obtained.

The system for synchronizing handwriting of multiple clients according to the present invention corresponds to the method for synchronizing handwriting of multiple clients according to the present invention, thus it should be noted that the technical features and advantages thereof as set forth in embodiments of the method for synchronizing handwriting of multiple clients are applicable to embodiments of the system for synchronizing handwriting of multiple clients.

Technical features of the above embodiments may be combined in any combination. For the purpose of simplicity, not all possible combinations of each technical feature of the above embodiments is described; however, combination of these features should be considered to be within the scope of the present specification as long as no contradiction arises.

The discussion of the above embodiments is merely for illustrating several implementations in detailed and specific description of the present invention, but is not intended to be construed in a limiting sense. It should be noted that, for those skilled in the art, various variations and modifications may be made which fall within the scope of the present invention. Therefore, the scope of the present invention should be subject to the appended claims.

## Claims

1. A method for synchronizing handwriting of multiple clients, wherein each client can be sender and receiver, comprising:
obtaining, by one or more senders, an input point of a handwriting by a user, and forming a set of input points from a plurality of consecutive input points to obtain a segmented handwriting data;
setting, by the one or more senders, identification information for the set of input points of the handwriting by the user, and forming one or more segments of the segmented handwriting data according to the identification information; and
receiving (S10), at a server, the segmented handwriting data of a real-time handwriting sent in segments from each of the one or more senders;
forwarding (S20), by the server, each segment of the segmented handwriting data to each receiver in real time respectively, wherein the segmented handwriting data is received asynchronously and restored into a real-time handwriting by each receiver,
restoring, by each receiver, the one or more segments of the segmented handwriting data into the real-time handwriting inputted by the user according to the identification information, wherein
the identification information comprises an ID of the user and an ID of the set of points;
receiving (S30), at the server, complete handwriting data of one inputted complete handwriting sent by each of the one or more senders; and
forwarding (S40), by the server, the complete handwriting data sent by each of the one or more senders to each receiver, wherein the complete handwriting data is received synchronously and the handwriting is inserted into an interface for display by each receiver.

2. The method for writing handwriting synchronization of multiple clients according to claim 1, wherein an input mode of the handwriting comprises mouse input, touch input, body sensation input or optical input.

3. The method for synchronizing handwriting of multiple clients according to claim 1, comprising receiving the segmented handwriting data of each handwriting sent by the sender at a preset frequency.

4. The method for synchronizing handwriting of multiple clients according to claim 3, further comprising
detecting a sending performance of the sender; and,
reducing a sending frequency when the transmission performance is deteriorated, and restoring the sending frequency to a preset frequency when the performance gets better.

5. The method for synchronizing handwriting of multiple clients according to claim 1, comprising, when forwarding each segmented handwriting data to each receiver in real time, discarding the segmented handwriting data if the forwarding of the segmented handwriting data fails.

6. The method for synchronizing handwriting of multiple clients according to claim 1, further comprising
recording complete handwriting data of each inputted complete handwriting of each sender, and sending the complete handwriting data to a newly added receiver to insert the complete handwriting into an interface for display.

7. A system for synchronizing handwriting of multiple clients, wherein each client can be sender and receiver, comprising:
one or more senders configured to obtain an input point of a handwriting by a user, and to form a set of input points from a plurality of consecutive input points to obtain a segmented handwriting data;
the one or more senders further configured to set identification information for the set of input points of the handwriting by the user, and to form one or more segments of the segmented handwriting data according to the identification information; and
a segment receiving module at a server, configured to receive the segmented handwriting data of a real-time handwriting sent in segments from each sender;
an asynchronous forwarding module at the server, configured to forward each segment of the segmented handwriting data to each receiver in real time respectively, each receiver configured to asynchronously receive the segmented handwriting data restore the one or more segments of the segmented handwriting data into the real-time handwriting inputted by the user according to the identification information, wherein
the identification information comprises an ID of the user and an ID of the set of points;
a complete receiving module at the server, configured to receive complete handwriting data of one inputted complete handwriting sent by each of the one or more senders; and
a synchronous forwarding module at the server, configured to forward the complete handwriting data sent by each of the one or more senders to each receiver, wherein each receiver is further configured to synchronously receive the complete handwriting data and insert it into an interface for display by each receiver.

## Patentansprüche

1. Verfahren zum Synchronisieren der Handschrift mehrerer Clients, wobei jeder Client Sender und Empfänger sein kann, mit den folgenden Schritten:
Erhalten, durch einen oder mehrere Sender, eines Eingabepunkts einer Handschrift eines Benutzers, und Bilden eines Satzes von Eingabepunkten aus mehreren aufeinanderfolgenden Eingabepunkten, um segmentierte Handschriftdaten zu erhalten;
Festlegen, durch den einen oder die mehreren Sender, von Identifikationsinformationen für den Satz von Eingabepunkten der Handschrift eines Benutzers, und Bilden eines oder mehrerer Segmente der segmentierten Handschriftdaten gemäß den Identifikationsinformationen; und
Empfangen (S10), an einem Server, der segmentierten Handschriftdaten einer Echtzeit-Handschrift, welche von dem einen oder den mehreren Sendern in Segmenten gesendet werden;
Weiterleiten (S20), durch den Server, jedes Segments der segmentierten Handschriftdaten an jeden Empfänger jeweils in Echtzeit, wobei die segmentierten Handschriftdaten asynchron empfangen werden und durch jeden Empfänger zu einer Echtzeit-Handschrift wiederhergestellt werden,
Wiederherstellen, durch jeden Empfänger, des einen oder der mehreren Segmente der segmentierten Handschriftdaten zu einer von dem Benutzer eingegebenen Echtzeit-Handschrift gemäß den Identifikationsinformationen, wobei die Identifikationsinformationen eine ID des Benutzers und eine ID des Satzes von Punkten aufweisen;
Empfangen (S30), am Server, vollständiger Handschriftdaten einer eingegebenen vollständigen Handschrift, welche von dem einen oder jedem der mehreren Sender gesendet werden; und
Weiterleiten (S40), durch den Server, der vollständigen Handschriftdaten, welche von dem einen oder jedem der mehreren Sender gesendet wurden, an jeden Empfänger, wobei die vollständigen Handschriftdaten synchron empfangen werden und die Handschrift in ein Interface zur Anzeige durch jeden Empfänger eingefügt wird.

2. Verfahren zum Synchronisieren der Handschrift mehrerer Clients nach Anspruch 1, bei welchem ein Handschrift-Eingabemodus eine Mauseingabe, eine Touch-Eingabe, eine Körper-Feedback-Eingabe oder eine optische Eingabe aufweist.

3. Verfahren zum Synchronisieren der Handschrift mehrerer Clients nach Anspruch 1, mit dem Schritt des Empfangens der segmentierten Handschriftdaten jeder von dem Sender mit einer voreingestellten Frequenz gesendeten Handschrift.

4. Verfahren zum Synchronisieren der Handschrift mehrerer Clients nach Anspruch 3, ferner mit den Schritten:
Erkennen einer Sendeleistung des Senders; und
Verringern einer Sendefrequenz, wenn die Übertragungsleistung sich verschlechtert, und
Wiederherstellen der Sendefrequenz zu einer voreingestellten Frequenz, wenn die Leistung sich verbessert.

5. Verfahren zum Synchronisieren der Handschrift mehrerer Clients nach Anspruch 1, bei welchem, wenn jede der segmentierten Handschriftdaten an jeden Empfänger in Echtzeit weitergeleitet werden, die segmentierten Handschriftdaten verworfen werden, wenn das Weiterleiten der segmentierten Handschriftdaten fehlschlägt.

6. Verfahren zum Synchronisieren der Handschrift mehrerer Clients nach Anspruch 3, ferner mit den Schritten:
Aufzeichnen vollständiger Handschriftdaten jeder eingegebenen vollständigen Handschrift jedes Senders, und Senden der vollständigen Handschriftdaten an einen neu hinzugefügten Empfänger, um die vollständige Handschrift zur Anzeige in ein Interface einzufügen.

7. System zum Synchronisieren der Handschrift mehrerer Clients, wobei jeder Client Sender und Empfänger sein kann, mit:
einem oder mehreren Sendern, die dazu ausgebildet sind, einen Eingabepunkt einer Handschrift eines Benutzers zu empfangen, und einen Satz von Eingabepunkten aus mehreren aufeinanderfolgenden Eingabepunkten zu bilden, um segmentierte Handschriftdaten zu erhalten;
wobei der eine oder die mehreren Sender ferner dazu ausgebildet sind, Identifikationsinformationen für den Satz von Eingabepunkten der Handschrift eines Benutzers einzustellen, und ein oder mehrere Segmente der segmentierten Handschriftdaten gemäß den Identifikationsinformationen zu bilden; und
einem Segmentempfangsmodul an einem Server, das dazu ausgebildet ist, die segmentierten Handschriftdaten einer Echtzeit-Handschrift, welche von dem einen oder den mehreren Sendern in Segmenten gesendet werden, zu empfangen;
einem Modul zum asynchronen Weiterleiten an dem Server, das dazu ausgebildet ist, jedes Segment der segmentierten Handschriftdaten an jeden Empfänger jeweils in Echtzeit zu senden, wobei jeder Empfänger dazu ausgebildet ist, die segmentierten Handschriftdaten asynchron zu empfangen und das eine oder die mehreren Segmente der segmentierten Handschriftdaten zu einer von dem Benutzer eingegebenen Echtzeit-Handschrift gemäß den Identifikationsinformationen wiederherzustellen, wobei die Identifikationsinformationen eine ID des Benutzers und eine ID des Satzes von Punkten aufweisen;
einem Modul zum vollständigen Empfangen am Server, das dazu ausgebildet ist, vollständige Handschriftdaten einer eingegebenen vollständigen Handschrift zu empfangen, welche von dem einen oder jedem der mehreren Sender gesendet werden; und
einem Modul zum synchronen Weiterleiten am Server, der dazu ausgebildet ist, die vollständigen Handschriftdaten, welche von dem einen oder jedem der mehreren Sender gesendet wurden, an jeden Empfänger zu senden, wobei jeder Empfänger ferner dazu ausgebildet ist, die vollständigen Handschriftdaten synchron zu empfangen und diese in ein Interface zur Anzeige durch jeden Empfänger einzufügen.

## Revendications

1. Procédé permettant de synchroniser une écriture manuscrite de multiples clients, dans lequel chaque client peut être envoyeur et récepteur, comprenant :
l'obtention, par un ou plusieurs envoyeurs, d'un point d'entrée d'une écriture manuscrite par un utilisateur, et la formation d'un ensemble de points d'entrée à partir d'une pluralité de points d'entrée consécutifs pour obtenir des données segmentées d'écriture manuscrite ;
le réglage, par la ou les envoyeurs, d'informations d'identification pour l'ensemble de points d'entrée de l'écriture manuscrite par l'utilisateur, et la formation d'un ou plusieurs segments des données segmentées d'écriture manuscrite selon les informations d'identification, et
la réception (S10), au niveau d'un serveur, des données segmentées d'écriture manuscrite d'une écriture manuscrite en temps réel envoyées en segments à partir de chacun parmi le ou les envoyeurs ;
l'acheminement (S20), par le serveur, de chaque segment des données segmentées d'écriture manuscrite à chaque récepteur en temps réel respectivement, dans lequel les données segmentées d'écriture manuscrite sont reçues de façon asynchrone et restaurées en une écriture manuscrite en temps réel par chaque récepteur,
la restauration, par chaque récepteur, du ou des segments des données segmentées d'écriture manuscrite en l'écriture manuscrite en temps réel entrée par l'utilisateur selon les informations d'identification, les informations d'identification comprend un ID de l'utilisateur et un ID de l'ensemble de points ;
la réception (S30), au niveau du serveur, de données complètes d'écriture manuscrite d'une écriture manuscrite complète entrée envoyée par chacun parmi le ou les envoyeurs ; et
l'acheminement (S40), par le serveur, des données complètes d'écriture manuscrite envoyées par chacun parmi le ou les envoyeurs à chaque récepteur, dans lequel les données complètes d'écriture manuscrite sont reçues de façon synchrone et l'écriture manuscrite est insérée dans une interface pour affichage par chaque récepteur.

2. Procédé de synchronisation d'écriture manuscrite d'écriture de multiples clients selon la revendication 1, dans lequel un mode d'entrée de l'écriture manuscrite comprend une entrée à la souris, une entrée tactile, une entrée par sensation corporelle ou une entrée optique.

3. Procédé permettant de synchroniser une écriture manuscrite de multiples clients selon la revendication 1, comprenant la réception des données segmentées d'écriture manuscrite de chaque écriture manuscrite envoyée par l'envoyeur à une fréquence préréglée.

4. Procédé permettant de synchroniser une écriture manuscrite de multiples clients selon la revendication 3, comprenant en outre :
la détection d'une performance d'envoi de l'envoyeur ; et,
la réduction d'une fréquence d'envoi lorsque la performance de transmission est dégradée, et la restauration de la fréquence d'envoi à une fréquence préréglée lorsque la performance s'améliore.

5. Procédé permettant de synchroniser une écriture manuscrite de multiples clients selon la revendication 1, comprenant, lors de l'acheminement de chaque donnée segmentée d'écriture manuscrite à chaque récepteur en temps réel, le rejet des données segmentées d'écriture manuscrite si l'acheminement des données segmentées d'écriture manuscrite échoue.

6. Procédé permettant de synchroniser une écriture manuscrite de multiples clients selon la revendication 1, comprenant en outre :
l'enregistrement de données complètes d'écriture manuscrite de chaque écriture manuscrite complète entrée de chaque envoyeur, et l'envoi des données complètes d'écriture manuscrite à un récepteur nouvellement ajouté pour insérer l'écriture manuscrite complète dans une interface pour affichage.

7. Système permettant de synchroniser une écriture manuscrite de multiples clients, dans lequel chaque client peut être envoyeur et récepteur, comprenant :
un ou plusieurs envoyeurs configurés pour obtenir un point d'entrée d'une écriture manuscrite par un utilisateur, et pour former un ensemble de points d'entrée à partir d'une pluralité de points d'entrée consécutifs pour obtenir des données segmentées d'écriture manuscrite ;
le ou les envoyeurs étant configurés en outre pour régler des informations d'identification pour l'ensemble de points d'entrée de l'écriture manuscrite par l'utilisateur, et pour former un ou plusieurs segments des données segmentées d'écriture manuscrite selon les informations d'identification ; et
un module de réception de segment au niveau d'un serveur, configuré pour recevoir les données segmentées d'écriture manuscrite d'une écriture manuscrite en temps réel envoyée en segments à partir de chaque envoyeur ;
un module d'acheminement asynchrone au niveau du serveur, configuré pour acheminer chaque segment des données segmentées d'écriture manuscrite à chaque récepteur en temps réel respectivement,
chaque récepteur configuré pour recevoir de façon asynchrone les données segmentées d'écriture manuscrite et restaurer le ou les segments des données segmentées d'écriture manuscrite en l'écriture manuscrite en temps réel entrée par l'utilisateur selon les informations d'identification, dans lequel les informations d'identification comprennent un ID de l'utilisateur et un ID de l'ensemble de points ;
un module de réception complète au niveau du serveur, configuré pour recevoir des données complètes d'écriture manuscrite d'une écriture manuscrite complète entrée envoyée par chacun parmi le ou les envoyeurs ; et
un module d'acheminement synchrone au niveau du serveur, configuré pour acheminer les données complètes d'écriture manuscrite envoyées par chacun parmi un ou plusieurs envoyeurs à chaque récepteur, dans lequel chaque récepteur est configuré en outre pour recevoir de façon synchrone des données complètes d'écriture manuscrite et les insérer dans une interface pour affichage par chaque récepteur.
